# EUROPEAN PATENT APPLICATION

(11) **EP 4 560 763 A1**
(43) Date of publication of application: **28.05.2025**
(21) Application number: 23842905.4
(22) Date of filing: 13.07.2023
(51) Int. Cl.: H01M 10/0562, H01G 9/08, H01G 11/06, H01G 11/70, H01M 4/13, H01M 4/66, H01M 4/80, H01M 10/0585, H01M 50/109, H01M 50/181, H01M 50/202, H01M 50/296, H01M 50/50, H01M 50/533, H01M 50/545, H01M 50/55, H01M 50/559

(54) **ALL-SOLID-STATE BATTERY**

(30) Priority: 19.07.2022 JP 2022114789; 03.08.2022 JP 2022123709
(71) Applicant: Maxell, Ltd., Kyoto 618-8525 (JP)
(72) Inventor: SEKIYA, Tomohito, Otokuni-gun, Kyoto 618-8525 (JP); YAMAGUCHI, Koji, Otokuni-gun, Kyoto 618-8525 (JP); FURUKAWA, Kazuki, Otokuni-gun, Kyoto 618-8525 (JP); OTSUKA, Takumi, Otokuni-gun, Kyoto 618-8525 (JP); SATO, Yuta, Otokuni-gun, Kyoto 618-8525 (JP); NISHIMURA, Masaki, Otokuni-gun, Kyoto 618-8525 (JP); MATSUOKA, Naoki, Otokuni-gun, Kyoto 618-8525 (JP); MASUDA, Shumpei, Otokuni-gun, Kyoto 618-8525 (JP); SATO, Seiji, Otokuni-gun, Kyoto 618-8525 (JP)
(74) Representative: Diehl & Partner
(86) International application number: PCT/JP2023/025832
(87) International publication number: WO 2024/018982

(57) **Abstract**

Provided is an all-solid-state battery having highly reliable electrical connection in a current collecting structure. An all-solid-state battery according to the present invention relates to Goals 3, 7, 11, and 12 of SDGs. The all-solid-state battery according to the present invention includes an electrode stacked body that is accommodated in a battery container having a recessed container and a sealing body and has a positive electrode, a negative electrode, and a solid electrolyte layer interposed between the positive electrode and the negative electrode. The positive electrode and the negative electrode each have a mixture layer and a sheet-like porous metal substrate disposed on a surface of the mixture layer. At least a portion of the porous metal substrate, including an end on the mixture layer side, is embedded in a surface layer of the mixture layer and is integrated with the mixture layer, and the other end of the porous metal substrate is exposed on a surface of the positive electrode or the negative electrode. An elastic conductive member is disposed between the electrode stacked body and an inner bottom face of the sealing body. The elastic conductive member is electrically connected to a conductive path of the recessed container, and presses the electrode stacked body toward an inner bottom face of the recessed container.

## Description

### Technical Field

The present invention relates to an all-solid-state battery with high electrical connectivity.

### Background Art

In recent years, the development of portable electronic devices such as cellular phones and laptop personal computers, the practical use of electric vehicles, and the like have led to the need for compact and lightweight batteries that have a high capacity and a high energy density.

Currently, in lithium batteries, especially lithium-ion batteries, that can meet this demand, a lithium-containing composite oxide such as lithium cobalt oxide (LiCoO₂) or lithium nickel oxide (LiNiO₂) is used as a positive electrode active material, graphite or the like is used as a negative electrode active material, and an organic electrolyte solution containing an organic solvent and a lithium salt is used as a nonaqueous electrolyte.

Due to further development of devices that use lithium-ion batteries, there is a demand for lithium-ion batteries having an increased life-span, a higher capacity, and a higher energy density, and a high degree of reliability is also required for the lithium-ion batteries having an increased life-span, a higher capacity, and a higher energy density.

However, since an organic electrolyte solution used in a lithium-ion battery contains a flammable organic solvent, the organic electrolyte solution may abnormally generate heat when an abnormal situation such as a short circuit occurs in the battery. In recent years, as the energy density of lithium-ion batteries and the amount of organic solvent in the organic electrolyte solution have increased, there is growing need for reliability in lithium-ion batteries.

Under these circumstances, all-solid-state lithium batteries (all-solid-state batteries) not using organic solvents have also been considered. An all-solid-state lithium battery includes, instead of conventional organic solvent-based electrolytes, a molded body made of a solid electrolyte in which no organic solvents are used, and is highly reliable because there is no risk of the solid electrolyte abnormally generating heat.

Also, all-solid-state batteries are very safe as well as being highly reliable and highly environmentally resistant, and have an increased life-span. Therefore, it is anticipated that all-solid-state batteries will become maintenance-free batteries that can continue to contribute to the development of society, as well as to safety and security. Providing all-solid-state batteries to society will contribute to reaching the following goals of the 17 Sustainable Development Goals (SDGs) established by the United Nations: Goal 3 (to ensure healthy lives and promote well-being for all people of all ages), Goal 7 (to ensure access for all people to affordable, reliable, sustainable and modern energy), Goal 11 (to achieve inclusive, safe, resilient and sustainable cities and human settlements), and Goal 12 (to ensure sustainable production and consumption patterns).

Incidentally, various exterior bodies are used for batteries such as all-solid batteries. For example, Patent Document 1 proposes a battery package including: an insulation board having a recess for accommodating a power generating element and having two external electrodes on its bottom face; and a lid covering the recess, in which a conductive sheet that is thought to function as a current collector is placed on an upper face of the power generating element, and the battery package includes a wire that electrically connects the conductive sheet to one of the two external electrodes.

Patent Document 1 describes that an elastic body (spacer) such as a rubber spacer is interposed between the lid and the conductive sheet, and the thickness of the spacer is made thicker than the distance between the lid and the conductive sheet, and thus the conductive sheet is pressed by an elastic force of the spacer against the upper face of the electrode of the power generating element, thereby establishing a conductive connection. It is also described that thermally expandable butyl rubber or the like is used as a spacer, and the butyl rubber or the like is thermally expanded after sealing the exterior body to obtain effects similar to the above.

However, with the method in which an elastic body such as a rubber spacer is used, the exterior body needs to be sealed while reducing the thickness of the spacer by pressing the spacer using the lid, which is likely to reduce a sealing property. Also, with the method in which thermally expendable butyl rubber is used, butyl rubber needs to be heated to a high temperature (approximately 200°C) at which the butyl rubber is thermally expandable. Thus, in order to suppress deterioration of the active material and a solid electrolyte to maintain favorable properties, it is not easy to adjust heating conditions for thermal expansion of the butyl rubber.

### Prior Art Documents

### Patent Document

[Patent Document 1] WO 2022/030424

### Disclosure of Invention

### Problem to be Solved by the Invention

In addition to the application of exterior bodies in the form of the battery package disclosed in Patent Document 1 to all-solid-state batteries, there is a need to develop a technique by which the reliability of conductive connection between electrodes and current collectors placed inside the exterior bodies is increased.

The present invention was made in view of the above-described circumstances, and aims to provide an all-solid-state battery having a highly reliable electrical connection in a current collecting structure.

### Means for Solving Problem

An all-solid-state battery according to the present invention includes: a battery container; and an electrode stacked body accommodated in the battery container, in which the battery container includes a recessed container and a sealing body, the recessed container has a bottom, a side wall, and an opening portion, and has a conductive path extending from an inside to an outside of the recessed container, the opening portion of the recessed container is covered with the sealing body, the electrode stacked body has a positive electrode, a negative electrode, and a solid electrolyte layer interposed between the positive electrode and the negative electrode, the positive electrode has a positive electrode mixture layer and a sheet-like porous metal substrate disposed on a surface of the positive electrode mixture layer, at least a portion of the porous metal substrate of the positive electrode, including an end on the positive electrode mixture layer side, is embedded in a surface layer of the positive electrode mixture layer and is integrated with the positive electrode mixture layer, and another end of the porous metal substrate of the positive electrode is exposed on a surface of the positive electrode, the negative electrode has a negative electrode mixture layer and a sheet-like porous metal substrate disposed on a surface of the negative electrode mixture layer, at least a portion of the porous metal substrate of the negative electrode, including an end on the negative electrode mixture layer side, is embedded in a surface layer of the negative electrode mixture layer and is integrated with the negative electrode mixture layer, and another end of the porous metal substrate of the negative electrode is exposed on a surface of the negative electrode, an elastic conductive member is disposed between the electrode stacked body and an inner bottom face of the sealing body, and the elastic conductive member is electrically connected to the conductive path and presses the electrode stacked body toward an inner bottom face of the recessed container.

### Effects of the Invention

The present invention can provide an all-solid-state battery having highly reliable electrical connection in a current collecting structure.

### Brief Description of Drawings

[FIG. 1] FIG. 1 is a schematic cross-sectional view showing an example of an all-solid-state battery of the present invention.
[FIG. 2] FIG. 2 is a schematic cross-sectional view showing another example of the all-solid-state battery of the present invention.
[FIG. 3] FIG. 3 is a schematic perspective view showing an elastic conductive member of the all-solid-state battery shown in FIG. 2.
[FIG. 4] FIG. 4 is a scanning electron microscope photograph of a surface of an example of an electrode according to the all-solid-state battery of the present invention.

### Description of the Invention

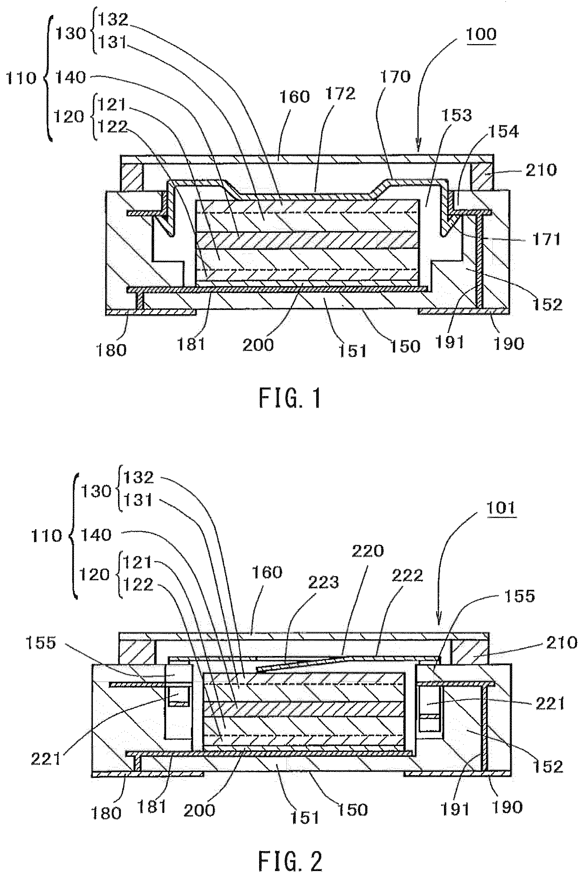

FIG. 1 is a schematic longitudinal cross-sectional view showing an example of an all-solid-state battery of the present invention. An all-solid-state battery 100 shown in FIG. 1 includes an electrode stacked body 110 having a positive electrode 120, a negative electrode 130, and a solid electrolyte layer 140 interposed between the positive electrode 120 and the negative electrode 130, and has a configuration in which the electrode stacked body 110 is sealed in a battery container formed by the recessed container 150 and the sealing body 160.

The recessed container 150 that constitutes the battery container is constituted by a bottom 151 and a side wall 152, and has an opening portion 153 that is open to the upper side in FIG. 1, and thus has a recessed cross section.

The positive electrode 120 has a positive electrode mixture layer 121 and a porous metal substrate 122, and the entire porous metal substrate 122, including an end on the positive electrode mixture layer 121 side, is embedded in a surface layer of the positive electrode mixture layer 121. That is, the entire portion where the porous metal substrate 122 is present corresponds to a region where the positive electrode mixture layer and the porous metal substrate coexist. Further, in the positive electrode 120, an end (a lower end in FIG. 1) of the porous metal substrate 122 opposite to the positive electrode mixture layer 121 side is exposed. Note that the dotted line in the positive electrode 120 indicates a boundary between a region of the positive electrode mixture layer 121 where the porous metal substrate does not coexist and a region where the positive electrode mixture layer and the porous metal substrate coexist, and corresponds to the end of the porous metal substrate 122 on the positive electrode mixture layer 121 side.

The negative electrode 130 has a negative electrode mixture layer 131 and a porous metal substrate 132, and the entire porous metal substrate 132, including an end on the negative electrode mixture layer 131 side, is embedded in a surface layer of the negative electrode mixture layer 131. That is, the entire portion where the porous metal substrate 132 is present corresponds to a region where the negative electrode mixture layer and the porous metal substrate coexist. Further, in the negative electrode 130, an end (an upper end in FIG. 1) of the porous metal substrate 132 opposite to the negative electrode mixture layer 131 side is exposed. Note that the dotted line in the negative electrode 130 indicates a boundary between a region of the negative electrode mixture layer 131 where the porous metal substrate does not coexist and a region where the negative electrode mixture layer and the porous metal substrate coexist, and corresponds to the end of the porous metal substrate 132 on the negative electrode mixture layer 131 side.

The recessed container 150 has connection terminals 180 and 190 on the lower side in FIG. 1, for electrical connection to a device in which the all-solid-state battery 100 is used. Also, the connection terminal 180 is conductively connected to a conductive path 181 that extends from the inside of the recessed container 150 to the connection terminal 180 located on the outside. The conductive path 181 is conductively connected to the positive electrode 120 according to the electrode stacked body 110 accommodated in the recessed container 150, and thereby the positive electrode 120 according to the electrode stacked body 110 and the connection terminal 180 are electrically connected to each other. Note that in the all-solid-state battery 100 shown in FIG. 1, a porous metal layer 200 is interposed between the positive electrode 120 according to the electrode stacked body 110 and the conductive path 181. The function of the porous metal layer 200 enhances the conductivity between the positive electrode 120 and the conductive path 181, and also makes it possible to suppress variations in the internal resistance of individual batteries when a large number of all-solid-state batteries are produced (this will be described later in detail).

Also, the connection terminal 190 is conductively connected to a conductive path 191 that extends from the inside of the recessed container 150 to the connection terminal 190 located on the outside, and the conductive path 191 is conductively connected to the negative electrode 130 via an elastic conductive member 170 that is disposed on an upper portion of the electrode stacked body 110 in FIG. 1, and is in contact with the negative electrode 130 of the electrode stacked body 110. As a result, the negative electrode 130 according to the electrode stacked body 110 and the connection terminal 190 are electrically connected to each other.

The side wall 152 of the recessed container 150 has a support 154 that supports the elastic conductive member 170. In the all-solid-state battery 100 shown in FIG. 1, the support 154 is a protruding portion that is formed at an upper end of an inner peripheral surface of the side wall 152 and protrudes in a radial direction, but the support for holding a conductive connection member of the all-solid-state battery may have another shape as long as it can support the conductive connection member.

The elastic conductive member 170 is constituted by, for example, a thin metal plate, and is provided at its end with a locking portion 171 that corresponds to the support 154 of the recessed container 150. In the all-solid-state battery 100 shown in FIG. 1, the locking portion 171 according to the elastic conductive member 170 is a hook-shaped locking piece that is locked to the support 154. In more detail, the locking portion 171 extends toward the support 154 (downward in the FIG. 1) from an edge of the elastic conductive member 170, and has a leading end that is folded back toward a lower face of the support 154.

Ends of the conductive path 191 are exposed on a side face and a lower face of the support 154, and the conductive path 191 and the locking portion 171 of the elastic conductive member 170 are in direct contact with each other, and thus they are conductively connected to each other. As a result, the elastic conductive member 170 functions as a current collector and forms part of a conductive path that electrically connects the negative electrode 130 and the connection terminal 190 to each other.

In the all-solid-state battery 100 shown in FIG. 1, when the elastic conductive member 170 is to be installed, the electrode stacked body 110 is first accommodated in the recessed container 150, and the elastic conductive member 170 is placed on the upper face of the electrode stacked body 110. Then, in a state in which the elastic conductive member 170 is placed on the upper face of the electrode stacked body 110, the leading end of the locking portion 171 is positioned between the upper face of the electrode stacked body 110 and the lower face of the support 154 in the axial direction of the electrode stacked body 110 (in the up-down direction in FIG. 1). The leading end of the locking portion 171 is locked to the lower face of the support 154 while the locking portion 171 of the elastic conductive member 170 is pushed toward the bottom 151 of the recessed container 150. At this time, because the locking portion 171 is pushed downward, the elastic conductive member 170 (its recess 172) warps in a direction opposite to the electrode stacked body 110 in a state in which the elastic conductive member 170 is in contact with the electrode stacked body 110. Accordingly, the elastic conductive member 170 presses the electrode stacked body 110 toward the bottom 151 of the recessed container 150 due to an elastic force. That is, the elastic conductive member 170 functions as a plate-shaped spring. The function of the elastic conductive member 170 improves electrical connection between the elastic conductive member 170 and the electrode stacked body 110 (its negative electrode 130) and electrical connection between the electrode stacked body 110 (its positive electrode 120) and the conductive path 181 (electrical connection between the electrode stacked body 110 and the porous metal layer 200 and electrical connection between the porous metal layer 200 and the conductive path 181), thereby improving the reliability of the electrical connection between members in the all-solid-state battery 100.

Note that the elastic conductive member 170 has the recess 172 that is in contact with the upper face of the electrode stacked body 110, and the bottom face of the recess 172 has a planar shape such that the electrode stacked body 110 can be pressed over a wider area. The elastic conductive member 170 functions to press the electrode stacked body 110 toward the inner bottom face of the recessed container 150. Since the elastic conductive member 170 is shaped to have a planar recess 172, it is possible to press the elastic conductive member 170 against the electrode stacked body 110 (its negative electrode 130) over a wider area, and press the electrode stacked body 110 (its positive electrode 120) against the conductive path 181 (the electrode stacked body 110 against the porous metal layer 200 and the porous metal layer 200 against the conductive path 181) over a wider area, which enables electrical connection therebetween over wider areas, thereby further improving the reliability of the electrical connection between the members in the all-solid-state battery 100.

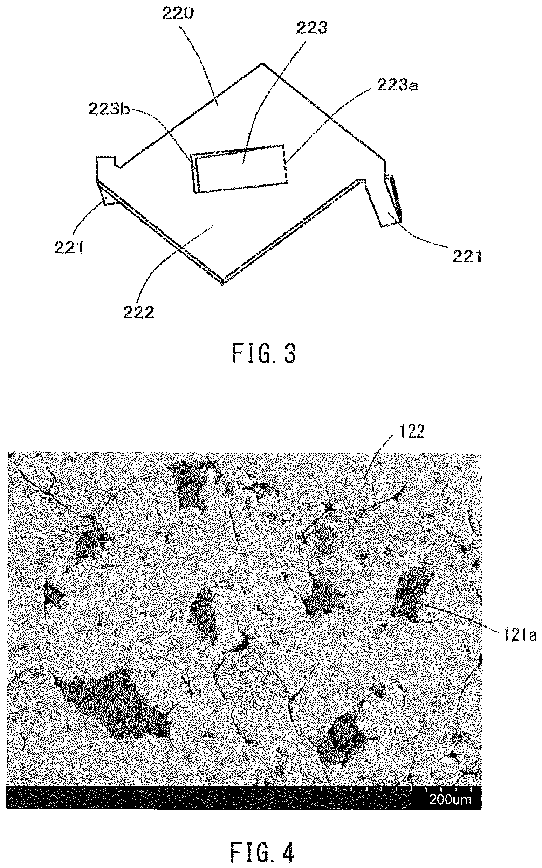

FIG. 2 is a schematic longitudinal cross-sectional view showing another example of the all-solid-state battery of the present invention. An all-solid-state battery 101 shown in FIG. 2 has an elastic conductive member 220. Also, FIG. 3 is a schematic perspective view showing the elastic conductive member 220 of the all-solid-state battery 101 shown in FIG. 2. The elastic conductive member 220 is constituted by, for example, a thin metal plate, and as shown in FIG. 3, has a rectangular shape in a plan view, but can have a shape corresponding to the shape, in a plan view, of the electrode stacked body or the recessed container of the all-solid-state battery.

The recessed container 150 of the all-solid-state battery 101 shown in FIG. 2 has a plurality of supports 155 for supporting the elastic conductive member 220 at the upper end of the side wall 152 thereof. The supports 155 are formed as protruding portions that protrude in the circumferential direction of the inner peripheral surface of the side wall 152. In more detail, the supports 155 are top walls of a plurality of cavities formed outward in the radial direction on the inner peripheral surface of the side wall 152. Also, a portion of the conductive path 191 is exposed on the lower face and the side face of each top wall. The supports 155 are formed in a number at least corresponding to the number of supported portions 221 of the elastic conductive member 220, which will be described later.

The elastic conductive member 220 has the supported portions 221 and a flat portion 222. A plurality of supported portions 221 are provided at positions corresponding to the positions of the supports 155 on the outer side in the radial direction in a plan view of the electrode stacked body 110 according to the all-solid-state battery 101. The supported portions 221 are hook-shaped locking pieces that are locked to the lower faces of the top walls of the supports 155, and extend from the edge of the elastic conductive member 220 toward the supports 155 (downward in FIG. 2). Also, each supported portion 221 has a leading end that is folded back toward the corresponding support 155, i.e., the lower face of the corresponding top wall. The leading end of the supported portion 221 is in contact with the conductive path 191 exposed on the lower face and the side face of the top wall of the support 155. As a result, the elastic conductive member 220 functions as a current collector and forms part of the conductive path that electrically connects the negative electrode 130 and the connection terminal 190 to each other.

The elastic conductive member 220 is supported by the supports 155 formed on the inner peripheral surface of the side wall 152 of the recessed container 150, and covers a part of the opening portion of the recessed container 150. The area of the elastic conductive member 220 in a plan view is smaller than the area of the opening portion of the recessed container 150. Even if the hook-shaped locking pieces of the elastic conductive member 220 are not locked to the lower face of the top walls of the supports 155, it is presumed that the elastic conductive member 220 is locked to the side wall 152 of the recessed container 150 as long as the elastic conductive member 220 can be fixed in a state in which the hook-shaped locking pieces are pressed into the cavities formed on the inner peripheral surface of the side wall 152.

As shown in FIG. 2, the elastic conductive member 220 has a spring part 223 that rises from the flat portion 222 toward the negative electrode 130 of the electrode stacked body 110, and the spring part 223 is in contact with the upper face of the negative electrode 130 (its porous metal substrate 132) of the electrode stacked body 110 in FIG. 2 and presses the electrode stacked body 110 toward the inner bottom face of the recessed container 150.

In the elastic conductive member having the spring part, the shape of the spring part is not particularly limited as long as it can press the electrode stacked body toward the inner bottom face of the recessed container. The spring part 223 of the elastic conductive member 220 shown in FIGS. 2 and 3 is a spring piece inclined from the flat portion 222 toward the negative electrode 130 of the electrode stacked body 110 (hereinafter, the spring part 223 may be referred to as a "spring piece 223"). As shown in FIG. 3, the spring piece 223 is formed by cutting out a part of the flat portion 222 in a U-shape, and is supported by the flat portion 222 in a cantilever manner. That is, the spring piece 223 of the elastic conductive member 220 shown in FIGS. 2 and 3 is a leaf spring. With the elastic conductive member 220 having such a configuration, it is sufficient to form the spring piece 223 in a part of the flat portion 222, and thus the elastic conductive member and the all-solid-state battery can be produced more easily. Also, by forming the spring piece 223 by cutting out the flat portion 222, the elastic conductive member, and hence the all-solid-state battery, can be produced even more easily.

The spring piece 223 has a boundary 223a with the flat portion 222, and a leading end 223b that is brought into contact with the negative electrode 130 of the electrode stacked body 110 to provide electrical connection with the negative electrode 130. Also, the spring piece 223 is bent at the boundary 223a and inclined to the electrode stacked body 110 side from the boundary 223a toward the leading end 223b.

In the elastic conductive member 220 before the all-solid-state battery 101 is assembled, the height from the bottom face of the flat portion 222 to the leading end 223b (the height of the spring piece 223) is greater than the height from the bottom face of the flat portion 222 to the leading end 223b in the elastic conductive member 220 after the all-solid-state battery 101 is assembled. This allows the electrode stacked body 110 to be pressed by the leading end 223b of the spring piece 223, making it possible to maintain a favorable electrical connection between the elastic conductive member 220 and the negative electrode 130 of the electrode stacked body 110.

The thickness of the elastic conductive member 220 excluding the supported portions 221 can be reduced by forming the spring part 223 using a spring piece in the elastic conductive member 220. For example, before the all-solid-state battery 101 is assembled, the thickness of the elastic conductive member 220 excluding the supported portions 221 can be the sum of the thickness of the plate member that constitutes the flat portion 222 and the height of the spring piece 223. Specifically, the thickness of the elastic conductive member 220 excluding the supported portions 221 can be 0.7 mm by combining the thickness of the plate member (0.2 mm) and the height of the spring piece (0.5 mm).

The spring piece 223 may have a length (length from the boundary 223a to the leading end 223b) of 3 mm, for example, and a width (length in a direction perpendicular to the length direction) of 1.5 mm, for example. Note that the elastic conductive member having a spring piece may have a plurality of spring pieces. In such a case, for reasons such as prevention of resonance, the shapes of the spring pieces, including their widths and lengths, may differ from one another. The thickness of the elastic conductive member 220 excluding the supported portions 221 is preferably 1.2 mm or less, more preferably 1 mm or less, and particularly preferably 0.8 mm or less. On the other hand, in order to ensure that the spring part 223 generates a favorable pressing force, the thickness of the elastic conductive member 220 excluding the supported portions 221 is preferably 0.3 mm or more, more preferably 0.4 mm or more, and particularly preferably 0.5 mm or more.

Further, the positions of the edges of the elastic conductive member 220, i.e., the positions of the supported portions 221, can be freely set in the height direction (thickness direction of the elastic conductive member 220). Therefore, the distance between the sealing body 160 and the leading end 223b of the spring piece 223 is not increased even when a gap is formed between the sealing body 160 and the elastic conductive member 220. As a result, a gap between the sealing body 160 and the electrode stacked body 110 can be prevented from increasing in size, and therefore the capacity of the all-solid-state battery 101 can be increased. Note that the thickness direction of the elastic conductive member 220 is the up-down direction (the height direction of the all-solid-state battery 101) in FIG. 2 and can also be said to be a direction orthogonal to the bottom face of the flat portion 222.

The overall thickness of the elastic conductive member 220 including the supported portions 221 can be set as appropriate according to the height of the side wall 152 of the recessed container 150 from the bottom 151. Also, it is sufficient that the supported portions 221 have a height necessary for locking to the supports 155. The overall thickness of the elastic conductive member 220 including the supported portions 221 can be 3 mm or less, is preferably 2.7 mm or less, and more preferably 2.5 mm or less.

In the elastic conductive member 220, the spring piece 223 may be formed by cutting out the flat portion 222 as described above, or a separate spring piece 223 may be attached to the bottom face of the flat portion 222 having a planar shape by welding the spring piece 223, for example. Alternatively, a base for attaching the spring piece 223 may be provided in advance separately from the flat portion 222, and the spring piece 223 may be attached to the base to form a spring part as a whole. That is, the spring piece 223 may rise directly from the flat portion 222 or may rise from the flat portion 223 via another element such as a base. Further, the spring piece 223 may be in a form in which both ends of the spring piece 223 are supported by the flat portion 222 to have a shape protruding toward the electrode stacked body 110.

In the all-solid-state battery 101 shown in FIG. 2, when the elastic conductive member 220 is to be installed, the electrode stacked body 110 is first accommodated in the recessed container 150, and the elastic conductive member 220 is placed on the upper face of the electrode stacked body 110. In a state in which the elastic conductive member 220 is placed on the upper face of the electrode stacked body 110, the leading ends of the supported portions 221 are positioned between the upper face of the electrode stacked body 110 and the supports 155, i.e., the lower faces of the top walls, in the axial direction of the electrode stacked body 110 (in the up-down direction in FIG. 2). The supported portions 221 of the elastic conductive member 220 are then supported by the supports 155 while being pushed toward the bottom 151 of the recessed container 150. In more detail, the leading ends of the supported portions 221 are locked to the supports 155, i.e., the lower faces of the top walls. Since the supported portions 221 are pushed downward, the spring piece 223 of the elastic conductive member 220 is pushed in a direction opposite to the negative electrode 130 in contact with the electrode stacked body 110. At this time, the spring piece 223 presses the electrode stacked body 110 toward the bottom 151 of the recessed container 150 due to its elastic force. This allows the elastic conductive member 220 to come into more stable contact with the electrode stacked body 110 and prevents displacement caused by vibration or the like, making it possible to maintain favorable electrical connection.

In the all-solid-state battery 101 shown in FIG. 2, the recessed container 150 has two supports 155, but the number of supports 155 may be three or more. The supported portions 221 of the elastic conductive member 220 may be formed in accordance with the number of supports 155.

Note that examples of a method for fixing the edge (supported portions 221) of the elastic conductive member 220 to the inner peripheral surface of the side wall 152 of the recessed container 150 include a method for bonding the edges of the elastic conductive member 220 to the inner peripheral surface of the side wall 152 of the recessed container 150.

Note that it is preferable that a gap is formed between the sealing body 160 and the elastic conductive member 170 and between the sealing body 160 and the elastic conductive member 220 as shown in FIGS. 1 and 2. That is, it is preferable that the elastic conductive members 170 and 220 are not in contact with the sealing body 160. This makes it possible to avoid contact between the sealing body 160 and the elastic conductive member 170 and between the sealing body 160 and the elastic conductive member 220 even if the elastic conductive member 170 or the elastic conductive member 220 is pushed toward the sealing body 160 due to a change in volume of the electrode stacked body 110 constituted by the power generating element.

Although the electrode stacked body 110 is disposed in the all-solid-state battery shown in FIGS. 1 and 2 such that the positive electrode 120 is located on the inner bottom face side of the recessed container 150 and the negative electrode 130 is located on the sealing body 160 side (elastic conductive member side), the all-solid-state battery can also be constructed by disposing the electrode stacked body such that the negative electrode is located on the inner bottom face side of the recessed container and the positive electrode is located on the sealing body side (elastic conductive member side).

The positive electrode of the all-solid-state battery has a positive electrode mixture layer and a sheet-like porous metal substrate disposed on the surface of the positive electrode mixture layer. At least a portion of the porous metal substrate of the positive electrode, including an end on the positive electrode mixture layer side, is embedded in the surface layer of the positive electrode mixture layer and is integrated with the positive electrode mixture layer, and the other end of the porous metal substrate of the positive electrode is exposed on the surface of the positive electrode. The negative electrode of the all-solid-state battery has a negative electrode mixture layer and a sheet-like porous metal substrate disposed on the surface of the negative electrode mixture layer. At least a portion of the porous metal substrate of the negative electrode, including an end on the negative electrode mixture layer side, is embedded in the surface layer of the negative electrode mixture layer and is integrated with the negative electrode mixture layer, and the other end of the porous metal substrate of the negative electrode is exposed on the surface of the negative electrode.

That is, in the electrode stacked body of the all-solid-state battery, in the positive electrode, a certain range in the thickness direction from an end (end face) of the porous metal substrate, which functions as a current collector, on the positive electrode mixture layer side is embedded in the positive electrode mixture layer, and in the negative electrode, a certain range in the thickness direction from an end (end face) of the porous metal substrate, which functions as a current collector, on the negative electrode mixture layer side is embedded in the negative electrode mixture layer. Therefore, in the positive electrode, the positive electrode mixture that constitutes the positive electrode mixture layer is held in at least some of the pores of the porous metal substrate, and thus the porous metal substrate is integrated with the positive electrode mixture layer. Also, in the negative electrode, the negative electrode mixture that constitutes the negative electrode mixture layer is held in at least some of the pores of the porous metal substrate, and thus the porous metal substrate is integrated with the negative electrode mixture layer. This provides very good electrical connection between the positive electrode mixture layer and the current collector (porous metal substrate) and very good electrical connection between the negative electrode mixture layer and the current collector (porous metal substrate).

Also, in the electrode stacked body according to the all-solid-state battery, an end (end face) of the porous metal substrate of the positive electrode opposite to the positive electrode mixture layer is exposed on the surface (the surface of the positive electrode), and an end (end face) of the porous metal substrate of the negative electrode opposite to the negative electrode mixture layer is exposed on the surface (the surface of the negative electrode). Therefore, as shown in FIGS. 1 and 2, the all-solid-state battery is constructed using the battery container having the conductive paths extending from the inside to the outside, and the porous metal substrate on the surface of the positive electrode and the porous metal substrate on the surface of the negative electrode are respectively brought into contact with the conductive path for the positive electrode (or the porous metal layer arranged adjacent to the positive electrode) and the conductive path for the negative electrode (or the porous metal layer arranged adjacent to the negative electrode), thereby providing very good electrical connection between the positive electrode and the conductive path (or the porous metal layer arranged adjacent to the positive electrode) and very good electrical connection between the negative electrode and the conductive path (the porous metal layer arranged adjacent to the negative electrode).

In the all-solid-state battery according to the present invention, the above functions of the positive electrode and the negative electrode that constitute the electrode stacked body, and the function of the elastic conductive member make it possible to increase the reliability of electrical connection in the current collecting structure.

Hereinafter, details of the all-solid-state battery will be described.

### <Electrode stacked body>

The electrode stacked body has the positive electrode, the negative electrode, and the solid electrolyte layer interposed therebetween.

### (Positive electrode)

The positive electrode has the positive electrode mixture layer containing a positive electrode active material and the like, and a sheet-like porous metal substrate that functions as a current collector.

In a case where the all-solid-state battery is a primary battery, it is possible to use, as its positive electrode active material, the same positive electrode active material that is used in conventionally known nonaqueous electrolyte primary batteries. Specifically, examples thereof include manganese dioxide, lithium-containing manganese oxides (e.g., LiMn₃O₆, composite oxides that have the same crystal structure (β-type structure, γ-type structure, or a structure in which β-type and γ-type are mixed) as manganese dioxide, and contains Li in an amount of 3.5% by mass or less, preferably 2% by mass or less, more preferably 1.5% by mass or less, and particularly preferably 1% by mass or less, or the like), lithium-containing composite oxides such as LiₐTi_{5/3}O₄ (4/3 ≤ a < 7/3); vanadium oxides; niobium oxides; titanium oxides; sulfides such as iron disulfide; graphite fluoride; silver sulfides such as Ag₂S; and nickel oxides such as NiO₂.

In a case where the all-solid-state battery is a secondary battery, it is possible to use, as a positive electrode active material of its positive electrode, the same positive electrode active material that is used in conventionally known nonaqueous electrolyte secondary batteries. Specific examples of the positive electrode active material include spinel-type lithium manganese composite oxides represented by Li₁₋ₓMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x and r satisfy 0 ≤ x ≤ 1 and 0 ≤ r ≤ 1), layered compounds represented by LiᵣMn₍₁₋ₛ₋ₜ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0 ≤ r ≤ 1.2, 0 < s < 0.5, 0 ≤ t ≤ 0.5, u + v <1, -0.1 ≤ u ≤ 0.2, and 0 ≤ v ≤ 0.1), lithium cobalt composite oxides represented by Li₁₋ₓCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and x and r satisfy 0 ≤ x ≤ 1 and 0 ≤ r ≤ 0.5), lithium nickel composite oxides represented by Li₁₋ₓNi₁₋ᵣMᵣO₂ (where M is at least one element selected from the group consisting ofAl, Mg, Ti, Zr, Fe, Co, Cu, Zn, Ga, Ge, Nb, Mo, Sn, Sb, and Ba, and x and r satisfy 0 ≤ x ≤ 1 and 0 ≤ r ≤ 0.5), olivine-type composite oxides represented by Li₁₊ₛ₋ₓM₁₋ᵣNᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x, r, and s satisfy 0 ≤ x ≤ 1, 0 ≤ r ≤ 0.5, and 0 ≤ s ≤ 1), and pyrophosphate compounds represented by Li₂₋ₓM₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x and r satisfy 0 ≤ x ≤ 2 and 0 ≤ r ≤ 0.5). These compounds may be used alone or in combination of two or more.

In a case where the all-solid-state battery is a secondary battery, the average particle size of the positive electrode active material is preferably 1 µm or more, more preferably 2 µm or more, and preferably 10 µm or less, and more preferably 8 µm or less. Note that the positive electrode active material may be primary particles or secondary particles obtained through aggregation of primary particles. When a positive electrode active material having an average particle size in the above range is used, a large interface with the solid electrolyte contained in the positive electrode can be obtained, thus enhancing output properties of the battery.

The average particle size of various particles (particles of a positive electrode active material, a solid electrolyte, and the like) used in this specification refers to the value of the 50% diameter (D₅₀) in a volume-based integrated fraction when the integrated volume is calculated from particles with a small particle size, using a particle size distribution measuring device (Microtrac particle size analyzer "HRA9320" manufactured by Nikkiso Co., Ltd., etc.).

In a case where the all-solid-state battery is a secondary battery, it is preferable that the positive electrode active material includes, on its surface, a reaction suppressing layer for suppressing a reaction between the positive electrode active material and the solid electrolyte contained in the positive electrode.

If the positive electrode active material comes into direct contact with the solid electrolyte in the positive electrode mixture layer, there is a risk that the solid electrolyte will be oxidized and a resistive layer will be formed, which will lead to a reduction in ion conductivity in the positive electrode mixture layer. By providing the reaction suppressing layer for suppressing a reaction with the solid electrolyte on the surface of the positive electrode active material to prevent direct contact between the positive electrode active material and the solid electrolyte, it is possible to suppress a reduction in ion conductivity in the positive electrode mixture layer due to oxidation of the solid electrolyte.

The reaction suppressing layer is only required to be made of a material that has ion conductivity and can suppress a reaction between the positive electrode active material and the solid electrolyte. Examples of materials that can constitute the reaction suppressing layer include oxides that include Li and at least one element selected from the group consisting of Nb, P, B, Si, Ge, Ti, and Zr, or more specifically, Nb-containing oxides such as LiNbO₃, and Li₃PO₄, Li₃BO₃, Li₄SiO₄, Li₄GeO₄, LiTiO₃, LiZrO₃, and Li₂WO₄. The reaction suppressing layer may contain only one or two or more of these oxides. Furthermore, a plurality of oxides out of these oxides may form a composite compound. Among these oxides, Nb-containing oxides are preferably used, and LiNbO₃ is more preferably used.

Preferably, 0.1 to 1.0 part by mass of the reaction suppressing layer is present on the surface of the positive electrode active material relative to 100 parts by mass of the positive electrode active material. When the amount of the reaction suppressing layer is within this range, it is possible to favorably suppress a reaction between the positive electrode active material and the solid electrolyte.

The reaction suppressing layer can be formed on the surface of the positive electrode active material using a sol-gel method, a mechano-fusion method, a CVD method, a PVD method, an ALD method, or the like.

The content of the positive electrode active material in the positive electrode mixture is preferably 60% by mass to 85% by mass from the viewpoint of further increasing the energy density of the all-solid-state battery.

It is possible to add a conductive assistant to the positive electrode mixture. Specific examples thereof include carbon materials such as graphite (natural graphite, artificial graphite), graphene, carbon black, carbon nanofiber, and carbon nanotubes. Note that, for example, in a case where Ag₂S is used as an active material, conductive Ag will be generated during the discharge reaction, and thus a conductive assistant does not need to be added. When a conductive assistant is added to the positive electrode mixture, the content of the conductive assistant is preferably 1.0 part by mass or more and preferably 7.0 parts by mass or less, and more preferably 6.5 parts by mass or less, where the content of the positive electrode active material is 100 parts by mass.

It is also possible to add a binder to the positive electrode mixture. Specific examples thereof include fluororesins such as polyvinylidene fluoride (PVDF). Note that, for example, in a case where favorable moldability can be ensured when the positive electrode mixture layer is formed without using a binder as in the case where a sulfide-based solid electrolyte is added to the positive electrode mixture (details will be described later), a binder does not need to be added to the positive electrode mixture.

In a case where a binder is required in the positive electrode mixture, the binder content is preferably 15% by mass or less, and preferably 0.5% by mass or more. On the other hand, in a case where moldability can be obtained in the positive electrode mixture without the need for a binder, the binder content is preferably 0.5% by mass or less, more preferably 0.3% by mass or less, and even more preferably 0% by mass (i.e., no binder is contained).

The positive electrode mixture preferably contains a solid electrolyte.

There is no particular limitation on the solid electrolyte contained in the positive electrode mixture, as long as the solid electrolyte has lithium-ion conductivity, and for example, sulfide-based solid electrolytes, hydride-based solid electrolytes, halide-based solid electrolytes, oxide-based solid electrolytes, and the like can be used.

Examples of the sulfide-based solid electrolytes include particles of Li₂S-P₂S₅-based glass, Li₂S-SiS₂-based glass, Li₂S-P₂S₅-GeS₂-based glass, Li₂S-B₂S₃-based glass, or the like. In addition, it is possible to use thio-LISICON-type solid electrolytes (Li_{12-12a-b+c+6d-e}M¹_{3+a-b-c-d}M²_{b}M³_{c}M⁴_{d}M⁵₁₂₋ₑXₑ (where M¹ represents Si, Ge, or Sn, M² represents P or V, M³ represents Al, Ga, Y, or Sb, M⁴ represents Zn, Ca, or Ba, M⁵ represents S or any one of S and O, X represents F, Cl, Br, or I, and a, b, c, d, and e satisfy 0 ≤ a < 3, 0 ≤ b + c + d ≤ 3, and 0 ≤ e ≤ 3), such as Li₁₀GeP₂S₁₂ and Li_{9.54}Si_{1.74}P_{1.44}S_{11.7}Cl_{0.3}), and solid electrolytes having an argyrodite-type crystal structure, which have attracted attention in recent years due to their high lithium-ion conductivity.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). At least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the halide-based solid electrolytes include monoclinic LiAlCl₄, defect spinel or layered LiInBr₄, and monoclinic Li₆₋₃ₘYₘX₆ (where m satisfies 0 < m < 2 and X = Cl or Br), and it is possible to use known solid electrolytes disclosed in WO 2020/070958 and WO 2020/070955, and the like.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃.

Among these solid electrolytes, sulfide-based solid electrolytes are preferable because sulfide-based solid electrolytes have high lithium-ion conductivity, and sulfide-based solid electrolytes containing Li and P are more preferable. Sulfide-based solid electrolytes that have an argyrodite-type crystal structure are even more preferable because such sulfide-based solid electrolytes have high lithium-ion conductivity and high chemical stability.

The sulfide-based solid electrolytes having an argyrodite-type crystal structure represented by General Composition Formula (1) below or General Composition Formula (2) below, such as Li₆PS₅Cl, are particularly preferable.

Li_{7-x+y}PS₆₋ₓCl_{x+y} (1)

In General Composition Formula (1) above, 0.05 ≤ y ≤ 0.9, and -3.0x + 1.8 ≤ y ≤ -3.0x + 5.7 are satisfied.

Li₇₋ₐPS₆₋ₐCl_{b}Br_{c} (2)

In General Composition Formula (2) above, a = b + c, 0 < a ≤ 1.8, and 0.1 ≤ b/c ≤ 10.0 are satisfied.

From the viewpoint of reducing grain boundary resistance, the average particle size of the solid electrolyte is preferably 0.1 µm or more, and more preferably 0.2 µm or more, and from the viewpoint of forming a sufficient contact interface between the active material and the solid electrolyte, is preferably 10 µm or less, and more preferably 5 µm or less.

From the viewpoint of further increasing ion conductivity in the positive electrode and further improving an output property of the all-solid-state battery, the content of the solid electrolyte in the positive electrode mixture is preferably 10 parts by mass or more, and preferably 15 parts by mass or more, where the content of the positive electrode active material is 100 parts by mass. However, if the positive electrode mixture contains an excessive amount of the solid electrolyte, the amount of other components will be reduced, which may reduce effects of the other components. Therefore, the content of the solid electrolyte in the positive electrode mixture is preferably 65 parts by mass or less, and more preferably 60 parts by mass or less, where the content of the positive electrode active material is 100 parts by mass.

It is preferable to use a porous metal foam as the sheet-like porous metal substrate in the positive electrode. A specific example of the porous metal foam is "Celmet (registered trademark)" available from Sumitomo Electric Industries, Ltd. Note that the thickness of such a porous metal substrate before use in the positive electrode (electrode stacked body) is usually greater than the thickness (the thickness thereof in the positive electrode) (e.g., the thickness before compression is preferably 0.1 mm or more, more preferably 0.3 mm or more, and particularly preferably 0.5 mm or more, and preferably 3 mm or less, more preferably 2 mm or less, and particularly preferably 1.5 mm or less). The porous metal substrate is compressed in the thickness direction during production of the electrode stacked body described below, and thus the thickness thereof will take a value described below.

The porosity of the porous metal substrate before compression is preferably 80% or more, more preferably 90% or more, and particularly preferably 95% or more, so that the pores of the porous metal substrate can be readily filled with the positive electrode mixture in a step of applying pressure to the porous metal substrate and the positive electrode mixture, and thus the porous metal substrate and the positive electrode mixture layer can be readily integrated with each other. On the other hand, in order to increase conductivity by maintaining the amount of the substrate at a certain level or more, the porosity is preferably 99.5% or less, more preferably 99% or less, and particularly preferably 98.5% or less.

In the positive electrode, from the viewpoint of more reliably integrating the porous metal substrate and the positive electrode mixture layer with each other, the thickness of a portion of the porous metal substrate embedded in the positive electrode mixture layer is preferably 10% or more, and more preferably 20% or more of the thickness of the porous metal substrate (the thickness of the entire porous metal substrate, including the thickness of the portion where the positive electrode mixture layer coexists; unless otherwise specified, the same applies to the thickness of the porous metal substrate hereinafter).

Also, in order to reduce resistance when the positive electrode comes into contact with the conductive path in the battery container (or the porous metal layer arranged adjacent to the positive electrode), it is desired that an end of the porous metal substrate opposite to the positive electrode mixture layer is not embedded in the positive electrode mixture layer, and an end of the positive electrode (the surface of the positive electrode) is constituted only by the porous metal substrate. That is, when the porous metal substrate is compressed in the thickness direction during the production of the electrode stacked body described below, it is desired that pores at the end of the porous metal substrate are crushed and eliminated, and thus only the porous metal substrate is exposed on the surface of the positive electrode. However, some of the pores at the end of the porous metal substrate may not be crushed, and be filled with the positive electrode mixture, and part of the positive electrode mixture may be exposed on the surface of the positive electrode together with the end of the porous metal substrate as long as resistance of contact with the conductive path (or the porous metal layer arranged adjacent to the positive electrode) is not significantly affected.

FIG. 4 is a scanning electron microscope (SEM) photograph of a surface of an example of the positive electrode. An end of the porous metal substrate 122 is exposed on the surface of the positive electrode shown in FIG. 4, and part of the positive electrode mixture 121a is also exposed on the surface of the positive electrode by entering pores present at the end of the porous metal substrate.

However, the greater the ratio (area ratio) of the positive electrode mixture exposed on the surface of the positive electrode is, the greater the resistance of contact between the porous metal substrate and the conductive path of the battery container (or the porous metal layer arranged adjacent to the positive electrode) is. Thus, the percentage of the area of the exposed positive electrode mixture to the surface of the positive electrode in a plan view is set to desirably 50% or less, more desirably 25% or less, even more desirably 15% or less, and particularly desirably 10% or less.

In the positive electrode, when at least a portion of the porous metal substrate is to be embedded in the positive electrode mixture layer, from the viewpoint of more reliably integrating the porous metal substrate and the positive electrode mixture layer with each other, the thickness of the porous metal substrate is preferably 1% or more, more preferably 2% or more, and particularly preferably 3% or more of the total thickness of the positive electrode mixture layer (including the thickness of the portion coexisting with the porous metal substrate. The "thickness of the positive electrode mixture layer" below refers to the "total thickness of the positive electrode mixture layer" used here, unless otherwise stated). Also, from the viewpoint of improving a filling property of the positive electrode mixture layer in the positive electrode, the thickness of the porous metal substrate is preferably 30% or less, more preferably 20% or less, and particularly preferably 10% or less of the thickness of the positive electrode mixture layer.

Note that, in the positive electrode, the thickness of the porous metal substrate is preferably 10 µm or more, more preferably 20 µm or more, and particularly preferably 30 µm or more, and preferably 300 µm or less, more preferably 200 µm or less, and particularly preferably 100 µm or less. The thickness of the positive electrode mixture layer is preferably 0.2 mm or more, more preferably 0.5 mm or more, and particularly preferably 0.7 mm or more, and preferably 2 mm or less, more preferably 1.7 mm or less, and particularly preferably 1.5 mm or less.

In this specification, the thickness of the porous metal substrate, the thickness of the positive electrode mixture layer, and the thickness of a negative electrode mixture layer are each determined from the maximum width in the thickness direction of a region in which the porous metal substrate can be confirmed or a region in which the positive electrode mixture or the negative electrode mixture can be confirmed in an image obtained by observing, using a SEM at a magnification of 50 to 1000, a cross section of the positive electrode or the negative electrode in the thickness direction. Also, the thickness of the portion of the porous metal substrate embedded in the positive electrode mixture layer or the negative electrode mixture layer is determined from the maximum width in the thickness direction of a portion where the region in which the porous metal substrate can be confirmed overlaps the region in which the positive electrode mixture can be confirmed or the region in which the negative electrode mixture can be confirmed (the values in Examples described later were determined using these methods).

Also, the ratio (area ratio) of the positive electrode mixture exposed on the surface of the positive electrode and the ratio (area ratio) of the negative electrode mixture exposed on the surface of the negative electrode are determined by a ratio (A/B) of the total area (A) of portions where the positive electrode mixture or the negative electrode mixture is exposed to the area (B) of the entire positive electrode or the entire negative electrode in an image obtained by observing the surface of the positive electrode or the negative electrode using a SEM at a magnification of 50 to 200 (the values in Examples described later were determined using this method).

### (Negative electrode)

The negative electrode has a negative electrode mixture layer containing a negative electrode active material and the like, and a sheet-like porous metal substrate that functions as a current collector.

Examples of the negative electrode active material include carbon materials such as graphite, lithium titanium oxides (such as lithium titanate), simple substances and compounds (such as oxides) that contain elements such as Si or Sn, and alloys thereof. It is also possible to use, as negative electrode active materials, lithium metal and lithium alloys (lithium-aluminum alloy, lithium-indium alloy, and the like).

The content of the negative electrode active material in the negative electrode mixture is preferably 40% by mass to 80% by mass from the viewpoint of further increasing the energy density of the battery.

It is possible to add a conductive assistant to the negative electrode mixture. Specific examples thereof include conductive assistants that are the same as those listed above as examples of the conductive assistant to be added to the positive electrode mixture. The content of the conductive assistant in the negative electrode mixture is preferably 10 parts by mass to 30 parts by mass, where the content of the negative electrode active material is 100 parts by mass.

It is also possible to add a binder to the negative electrode mixture. Specific examples thereof include binders that are the same as those listed above as examples of the binder to be added to the positive electrode mixture. Note that, for example, in a case where favorable moldability can be ensured when the negative electrode mixture layer is formed without using a binder as in the case where a sulfide-based solid electrolyte is added to the negative electrode mixture (will be described later), a binder does not need to be added to the negative electrode mixture.

In a case where a binder is required in the negative electrode mixture, the binder content is preferably 15% by mass or less, and preferably 0.5% by mass or more. On the other hand, in a case where moldability can be obtained in the negative electrode mixture without the need for a binder, the binder content is preferably 0.5% by mass or less, more preferably 0.3% by mass or less, and even more preferably 0% by mass (i.e., no binder is contained).

The negative electrode mixture preferably contains a solid electrolyte. Specific examples thereof include solid electrolytes that are the same as those listed above as examples of the solid electrolyte to be added to the positive electrode mixture. Among the solid electrolytes listed above, it is preferable to use sulfide-based solid electrolytes because they have high lithium-ion conductivity and also function to improve the moldability of the negative electrode mixture, and it is more preferable to use sulfide-based solid electrolytes having an argyrodite-type crystal structure, and it is even more preferable to use sulfide-based solid electrolytes represented by General Composition Formula (1) above or General Composition Formula (2) above.

For the same reasons as in the case of the positive electrode mixture, the average particle size of the solid electrolyte in the negative electrode mixture is preferably 0.1 µm or more, more preferably 0.2 µm or more, and preferably 10 µm or less, and more preferably 5 µm or less.

From the viewpoint of further increasing the ion conductivity in the negative electrode and further improving an output property of the all-solid-state battery, the content of the solid electrolyte in the negative electrode mixture is preferably 30 parts by mass or more, and more preferably 35 parts by mass or more, where the content of the negative electrode active material is 100 parts by mass. However, if the negative electrode mixture contains an excessive amount of the solid electrolyte, the amount of other components will be reduced, which may reduce effects of the other components. Therefore, the content of the solid electrolyte in the negative electrode mixture is preferably 130 parts by mass or less and more preferably 110 parts by mass or less, where the content of the negative electrode active material is 100 parts by mass.

As in the positive electrode, it is preferable to use a porous metal foam as the sheet-like porous metal substrate in the negative electrode. A specific example of the porous metal foam is "Celmet (registered trademark)" available from Sumitomo Electric Industries, Ltd. Note that the thickness of such a porous metal substrate before use in the negative electrode (electrode stacked body) is usually greater than the thickness (the thickness thereof in the negative electrode) (e.g., the thickness before compression is preferably 0.1 mm or more, more preferably 0.3 mm or more, and particularly preferably 0.5 mm or more, and preferably 3 mm or less, more preferably 2 mm or less, and particularly preferably 1.5 mm or less). The porous metal substrate is compressed in the thickness direction during production of the electrode stacked body described below, and thus the thickness thereof will take a value described below.

The porosity of the porous metal substrate before compression is preferably 80% or more, more preferably 90% or more, and particularly preferably 95% or more, so that the pores of the porous metal substrate can be readily filled with the negative electrode mixture in a step of applying pressure to the porous metal substrate and the negative electrode mixture, and thus the porous metal substrate and the negative electrode mixture layer can be readily integrated with each other. On the other hand, in order to increase conductivity by maintaining the amount of the substrate at a certain level or more, the porosity is preferably 99.5% or less, more preferably 99% or less, and particularly preferably 98.5% or less.

In the negative electrode, from the viewpoint of more reliably integrating the porous metal substrate and the negative electrode mixture layer with each other, the thickness of a portion of the porous metal substrate embedded in the negative electrode mixture layer is preferably 10% or more and more preferably 20% or more of the thickness of the porous metal substrate (the thickness of the entire porous metal substrate, including the thickness of the portion where the negative electrode mixture layer coexists; unless otherwise specified, the same applies to the thickness of the porous metal substrate hereinafter).

Also, in order to reduce resistance when the negative electrode comes into contact with the conductive path in the battery container (or the porous metal layer arranged adjacent to the negative electrode), it is desired that an end of the porous metal layer opposite to the negative electrode mixture layer is not embedded in the negative electrode mixture layer, and an end of the negative electrode (the surface of the negative electrode) is constituted only by the porous metal substrate. That is, when the porous metal substrate is compressed in the thickness direction during the production of the electrode stacked body described below, it is desired that pores at the end of the porous metal substrate are crushed and eliminated, and thus only the porous metal substrate is exposed on the surface of the negative electrode. However, some of the pores at the end of the porous metal substrate may not be crushed and be filled with the negative electrode mixture, and part of the negative electrode mixture may be exposed on the surface of the negative electrode together with the end of the porous metal substrate as long as the resistance of contact with the conductive path (or the porous metal layer arranged adjacent to the negative electrode) is not significantly affected.

However, the greater the ratio (area ratio) of the negative electrode mixture exposed on the surface of the negative electrode is, the greater the resistance of contact between the porous metal substrate and the conductive path of the battery container (or the porous metal layer arranged adjacent to the negative electrode) is. Thus, the percentage of the area of the exposed negative electrode mixture to the surface of the negative electrode in a plan view is set to desirably 50% or less, more desirably 25% or less, even more desirably 15% or less, and particularly desirably 10% or less.

In the negative electrode, when at least a portion of the porous metal substrate is to be embedded in the negative electrode mixture layer, from the viewpoint of more reliably integrating the porous metal substrate and the negative electrode mixture layer with each other, the thickness of the porous metal substrate is preferably 1% or more, more preferably 2% or more, and particularly preferably 3% or more of the total thickness of the negative electrode mixture layer (including the thickness of the portion coexisting with the porous metal substrate. The "thickness of the negative electrode mixture layer" below refers to the "total thickness of the negative electrode mixture layer" used here, unless otherwise stated). From the viewpoint of improving a filling property of the negative electrode mixture layer in the negative electrode, the thickness of the porous metal substrate is preferably 30% or less, more preferably 20% or less, and particularly preferably 10% or less of the thickness of the negative electrode mixture layer.

The thickness of the porous metal substrate in the negative electrode is preferably 10 µm or more, more preferably 20 µm or more, and particularly preferably 30 µm or more, and preferably 300 µm or less, more preferably 200 µm or less, and particularly preferably 100 µm or less. The thickness of the negative electrode mixture layer is preferably 0.2 mm or more, more preferably 0.5 mm or more, and particularly preferably 0.7 mm or more, and preferably 2 mm or less, more preferably 1.7 mm or less, and particularly preferably 1.5 mm or less.

### (Solid electrolyte layer)

In the electrode stacked body, the solid electrolyte layer is interposed between the positive electrode and the negative electrode. Specific examples of the solid electrolyte that constitutes the solid electrolyte layer are the same as the solid electrolytes listed above as examples of the solid electrolyte to be added to the positive electrode mixture. Among the solid electrolytes listed above, due to having high lithium-ion conductivity and also functioning to improve moldability, it is preferable to use sulfide-based solid electrolytes, and it is more preferable to use sulfide-based solid electrolytes having an argyrodite-type crystal structure, and it is even more preferable to use sulfide-based solid electrolytes represented by General Composition Formula (1) above or the General Composition Formula (2) above.

The solid electrolyte layer may include, as a support, a porous body such as nonwoven fabric made of resin.

The thickness of the solid electrolyte layer is preferably 10 to 200 µm.

### (Method for producing electrode stacked body)

The electrode stacked body can be produced using a production method including the following first to third steps, for example.

In the first step, an electrode mixture (positive electrode mixture or negative electrode mixture) is introduced into a mold and subjected to compression molding. The surface pressure of the compression molding in the first step is preferably, for example, 30 to 500 MPa.

In the next second step, a porous metal substrate is placed on the electrode mixture that has been subjected to compression molding in the first step, and pressure is applied to the electrode mixture and the porous metal substrate in the next third step. The application of the pressure in the third step further compresses the electrode mixture while embedding the porous metal substrate in the electrode mixture from an end on the electrode mixture side, and compresses the porous metal substrate in the thickness direction, thereby integrating the electrode mixture layer (positive electrode mixture layer or negative electrode mixture layer) with the porous metal substrate to form an electrode (positive electrode or negative electrode).

As described above, the porous metal substrate is compressed in the thickness direction in the third step. From the viewpoint of more reliably integrating the porous metal substrate with the electrode mixture layer, the degree of compression is preferably such that the thickness of the porous metal substrate after compression is preferably 30% or less, more preferably 20% or less, and particularly preferably 10% or less of the thickness thereof before compression. Also, from the viewpoint of retaining a certain amount or more of the electrode mixture in the pores of the porous metal substrate and increasing the bonding strength between the porous metal substrate and the electrode mixture layer, the thickness of the porous metal substrate after compression in the third step is preferably 1% or more and more preferably 2% or more of the thickness thereof before compression.

In order to sufficiently increase the density of the electrode mixture layer by compression molding the electrode mixture, the surface pressure during the application of pressure in the third step is, for example, preferably 800 MPa or more, more preferably 1000 MPa or more, and particularly preferably 1200 MPa or more. Although the upper limit of the surface pressure during the application of pressure in the third step is not particularly specified, the upper limit is usually approximately 2000 MPa in an ordinary pressure device.

Through the first to third steps, it is possible to obtain an electrode (positive electrode or negative electrode) in which at least a portion of the porous metal substrate including the end on the electrode mixture layer side (a certain range in the thickness direction from the end of the porous metal substrate) is embedded in the surface layer of the electrode mixture layer and integrated with the electrode mixture layer, and the other end of the porous metal substrate is exposed on the surface of the electrode.

If the surface pressure during the application of pressure in the third step is increased, a crack may form when the porous metal substrate is compressed. However, even when the substrate is broken into pieces, these pieces can contribute to reducing contact resistance as long as ends of the pieces are exposed on the surface of the electrode.

A positive electrode and a negative electrode are produced through the first, second, and third steps, and placed on both sides of a solid electrolyte layer, and pressure is applied as needed, to form an electrode stacked body.

Furthermore, a preliminary step of introducing the solid electrolyte into a mold and performing compression molding may be provided before the first step, the electrode mixture (positive electrode mixture or negative electrode mixture) may be placed on the solid electrolyte obtained through compression molding in the preliminary step, and then the first step, the second step, and the third step may be performed successively to produce an integrated product of the solid electrolyte layer and the electrode (positive electrode or negative electrode), and the integrated product may be used for the electrode stacked body.

The surface pressure of the compression molding in the preliminary step is preferably, for example, 30 to 120 MPa.

Alternatively, an electrode stacked body can also be produced as follows: one of the positive electrode and the negative electrode is formed on one side of the solid electrolyte layer through the preliminary step, the first step, the second step, and the third step, and then another electrode (negative electrode or positive electrode) is formed on the other side of the solid electrolyte layer by successively performing the first step, the second step, and the third step.

### <Battery container>

As the battery container (exterior body) of the all-solid-state battery, any battery container can be used as long as it has a structure with a recessed container and a sealing body, the recessed container having a conductive path extending from the inside to the outside of the recessed container, and the porous metal substrate on the surface of the electrode (positive electrode or negative electrode) of the electrode stacked body being brought into contact with the conductive path, which allows electrical connection between the electrode and the conductive path. For example, battery containers having configurations shown in FIGS. 1 and 2 can be used. In such a battery container, it is possible to use a recessed container made of a ceramic material or resin. Also, it is possible to use a sealing body made of a ceramic material, resin, or metal (an iron-based alloy such as an iron-nickel alloy or an iron-nickel-cobalt alloy, or the like).

In the recessed container, the connection terminal and the conductive path that connects an electrode in the electrode stacked body and the connection terminal can be made of metal such as manganese, cobalt, nickel, copper, molybdenum, silver, palladium, tungsten, platinum, or gold, or an alloy containing such a metal.

The recessed container and the sealing body can be sealed by bonding them together with an adhesive. In addition, when a metal sealing body is used, as shown in FIGS. 1 and 2, a seal ring 210 made of metal (an iron-based alloy such as an iron-nickel alloy or an iron-nickel-cobalt alloy, or the like) may be placed on the sealing body 160 side (upper side in FIGS. 1 and 2) of the side wall 152 of the recessed container 150, for example, so that the sealing body side of the side wall is made of metal, and then the recessed container and the sealing body can be sealed by welding them together.

The shape of the battery container of the all-solid-state battery in a plan view may be a circular or polygonal shape such as a quadrilateral shape (square or rectangle).

### <Elastic conductive member>

There is no particular limitation on the elastic conductive member as long as it functions as a leaf spring that presses the electrode stacked body toward the inner bottom face of the recessed container. Specific examples thereof include, as shown in FIG. 1, an elastic conductive member having a cross section having the locking portion 171 shaped according to the support 154 of the recessed container 150, and the recess 172 that presses the electrode stacked body 110; an elastic conductive member having the supported portions 221 shaped according to the supports 155 of the recessed container 150 and the flat portion 222 having a spring part (spring piece) 223 as shown in FIGS. 2 and 3; and the like.

The elastic conductive member can be formed by a plate or the like made of nickel, iron, copper, chromium, cobalt, titanium, or aluminum, or an alloy thereof. Among the metals that may constitute the elastic conductive member and are mentioned above, a stainless steel plate and a stainless steel plate plated with nickel are preferable, and in order to facilitate the elastic conductive member to perform the function of a leaf spring, stainless steel for a spring, such as SUS301-CSP, SUS304-CSP, SUS316-CSP, SUS420J2-CSP, SUS631-CSP, and SUS632J1-CSP, is more preferable.

The thickness of the metal plate that constitutes the elastic conductive member is preferably 0.05 mm or more, more preferably 0.07 mm or more, and particularly preferably 0.1 mm or more, in order to maintain a certain level of pressing force against the electrode stacked body. On the other hand, in order to prevent the elastic conductive member from being excessively thick, which would increase the storage volume in the battery container, and make the elastic conductive member easily deformable such that the elastic conductive member can be readily locked to the side wall of the recessed container, the thickness of the metal plate that constitutes the elastic conductive member is preferably 0.5 mm or less, more preferably 0.4 mm or less, and particularly preferably 0.3 mm or less.

Also, when the elastic conductive member has a recess that presses the electrode stacked body as shown in FIG. 1, the area of a portion of the recess that is in contact with the electrode stacked body is preferably 3 to 45 mm², from the viewpoint of enabling the elastic conductive member to press the electrode stacked body more uniformly at a contact surface of the elastic conductive member with the electrode stacked body. The depth of the recess is preferably 0.05 to 0.50 mm.

### <Porous metal layer>

As described above, it is preferable to arrange the porous metal layer between the electrode stacked body and the inner bottom face of the recessed container related to the battery container, and to electrically connect the porous metal layer and the conductive path of the recessed container. That is, when the porous metal layer is disposed, an electrode on the inner bottom face side of the recessed container in the electrode stacked body (the positive electrode 110 in the case of the all-solid-state battery shown in FIG. 1) and the conductive path of the recessed container (the conductive path 181 in the case of the all-solid-state battery shown in FIG. 1) are electrically connected via the porous metal layer (the porous metal layer 200 in the case of the all-solid-state battery shown in FIG. 1).

The porous metal layer has pores and is made of metal, and thus can readily undergo plastic deformation when a force is applied in the thickness direction. Therefore, when forming an all-solid-state battery, the electrode stacked body is inserted into the exterior body to be pressed against the porous metal layer (the metallic porous body that constitutes the layer), or the electrode stacked body is pressed against the porous metal layer (the metallic porous body that constitutes the layer) by the pressing force of the elastic conductive member, thus compressing and deforming the porous metal layer, thereby improving contact with the sheet-like porous metal substrate of the electrode of the electrode stacked body on the porous metal layer side. Further, when a large number of all-solid-state batteries are produced, the degrees of electrical connection between the porous metal layers and the electrode stacked bodies in individual all-solid-state batteries can be made uniform. When the porous metal layer is used in an all-solid-state battery, the above effects make it possible to further reduce internal resistance and reduce variations in individual internal resistances.

It is sufficient that the porous metal layer is constituted by a porous body made of metal that does not adversely affect properties of the all-solid-state battery in the all-solid-state battery. However, it is preferable to use a porous metal foam ("Celmet (registered trademark)" manufactured by Sumitomo Electric Industries, Ltd., or the like) because it is relatively likely to undergo plastic deformation.

From the viewpoint of ensuring that the porous metal layer functions more favorably, the thickness of the porous metal layer in the all-solid-state battery is preferably 100 µm or more and more preferably 150 µm or more. There is no particular limitation on the upper limit of the thickness of the porous metal layer in the all-solid-state battery. However, from the viewpoint of suppressing the volume of a component that is not involved in power generation in the battery container, the upper limit of the thickness thereof is preferably 1500 µm or less and more preferably 1000 µm or less.

The thickness of the porous metal layer is determined from the maximum width in the thickness direction in an image obtained by observing its cross section in the thickness direction using a SEM at a magnification of 50 to 1000 (the values in Examples described later were determined using these methods).

As described above, the porous metal layer is preferably a metallic porous body compressed in the thickness direction, and the thickness thereof is preferably 90% or less, and more preferably 80% or less of the thickness of a metallic porous body (such as the porous metal foam mentioned above) used to form a porous metal layer. Therefore, the metallic porous body (such as the porous metal foam) used to form the porous metal layer preferably has a thickness of 150 to 1000 µm.

Also, from the viewpoint of further facilitating plastic deformation caused by pressing the electrode stacked body against the porous metal layer, ensuring a favorable effect of reducing the internal resistance of the all-solid-state battery, and ensuring a favorable effect of suppressing its variation, the porosity of the metallic porous body (such as the porous metal foam) used to form the porous metal layer is, preferably 99.5% or less, more preferably 99% or less, and even more preferably 98.5% or less. From the viewpoint of ensuring sufficient strength for use, the porosity thereof is preferably 80% or more, more preferably 90% or more, and even more preferably 95% or more.

### Examples

Hereinafter, the present invention will be described in detail based on examples. However, the examples below do not limit the present invention.

### (Example 1)

A negative electrode mixture was prepared by mixing lithium titanate (Li₄Ti₅O₁₂, negative electrode active material) particles having an average particle size of 2 µm, sulfide-based solid electrolyte (Li₆PS₅Cl) particles having an average particle size of 0.7 µm, and graphene (conductive assistant) in a mass ratio of 50 : 41 : 9.

A positive electrode mixture was prepared by mixing LiCoO₂ (positive electrode active material) particles having an average particle size of 5 µm and having a LiNbO₃ coating layer formed on their surfaces, and sulfide-based solid electrolyte (Li₆PS₅Cl) particles having an average particle size of 0.7 µm, and graphene in a mass ratio of 65 : 30.7 : 4.3.

Then, the powder of the sulfide-based solid electrolyte (Li₆PS₅Cl) particles having an average particle size of 0.7 µm was placed in a powder molding mold, and was subjected to compression molding using a pressing machine at a surface pressure of 70 MPa to form a temporarily molded layer for the solid electrolyte layer. Further, the negative electrode mixture was placed on an upper face of the temporarily molded layer for the solid electrolyte layer and subjected to compression molding at a surface pressure of 50 MPa, and then a temporarily molded layer for the negative electrode was formed on the temporarily molded layer for the solid electrolyte layer.

Then, a porous metal foam made of nickel ("Celmet" (registered trademark) made of nickel) available from Sumitomo Electric Industries, Ltd. was cut to a diameter of 7.25 mm (thickness: 1.2 mm, porosity: 98%), and the resulting piece of the porous metal foam was placed on the temporarily molded layer for the negative electrode formed on the temporarily molded layer for the solid electrolyte layer, and subjected to compression molding at a surface pressure of 300 MPa, to form an integrated product of the solid electrolyte layer and the negative electrode.

Further, the mold was turned upside down, the positive electrode mixture was placed on the upper face (the surface opposite to the surface having the negative electrode) of the solid electrolyte layer in the mold, and subjected to compression molding at a surface pressure of 50 MPa, and thus a temporarily molded layer for the positive electrode was formed on the solid electrolyte layer.

Then, the porous metal foam, which was made of nickel and was the same as that used for the negative electrode, was cut, and the resulting piece of the porous metal foam was placed on the temporarily molded layer for the positive electrode formed on the solid electrolyte layer, and subjected to compression molding at a surface pressure of 1400 MPa, to form an electrode stacked body.

In the obtained electrode stacked body, the thickness of the negative electrode mixture layer of the negative electrode, the thickness of the porous metal substrate, and the thickness of a portion of the porous metal substrate embedded in the negative electrode mixture layer were respectively 1400 µm, 60 µm (5% of the thickness of the porous metal substrate before use in the negative electrode), and 60 µm (100% of the total thickness of the porous metal substrate). Also, the area percentage of part of the negative electrode mixture exposed on the surface of the negative electrode was 7%.

In the obtained electrode stacked body, the thickness of the positive electrode mixture layer of the positive electrode, the thickness of the porous metal substrate, and the thickness of a portion of the porous metal substrate embedded in the positive electrode mixture layer were respectively 800 µm, 60 µm (5% of the thickness of the porous metal substrate before use in the positive electrode), and 60 µm (100% of the total thickness of the porous metal substrate). Also, the area percentage of part of the positive electrode mixture exposed on the surface of the positive electrode was 7%.

The porous metal foam, which was made of nickel and was the same as those used for the positive electrode and the negative electrode, was cut to a diameter of 7.25 mm, and the resulting piece of the porous metal foam was placed on the inner bottom face of the recessed container (ceramic depth was 2.5 mm) having a cross-sectional structure similar to that shown in FIG. 1, made of a ceramic material, and having a seal ring made of an iron-nickel-cobalt alloy disposed on an upper portion of the side wall, and the electrode stacked body was placed thereon with the positive electrode facing downward. Also, an elastic conductive member (the area of the contact surface of the recess with the electrode stacked body was 10 mm²) formed using a stainless steel plate (the thickness was 0.3 mm) and having a cross-sectional shape similar to that shown in FIG. 1 was placed on the negative electrode of the electrode stacked body such that the bottom face of the recess was in contact with the negative electrode, and a leading end of its locking portion was locked to a lower face of the support of the recessed container such that the recess of the elastic conductive member pressed the electrode stacked body toward the inner bottom face of the recessed container. Thereafter, the seal ring of the recessed container was covered with the sealing body constituted by an iron-nickel-cobalt alloy plate (the thickness was 0.1 mm), and the sealing body and the recessed container (seal ring) were welded together to seal the battery container, thus obtaining an all-solid-state secondary battery. As described above, in the obtained all-solid-state secondary battery, the elastic conductive member pressed the electrode stacked body toward the inner bottom face of the recessed container, and accordingly, the electrode stacked body pressed the porous metal layer constituted by the porous metal foam. Also, the thickness of the porous metal layer in the all-solid-state secondary battery was 200 µm.

### (Example 2)

An all-solid-state secondary battery was produced in the same manner as in Example 1, except that the amount of the negative electrode mixture and the amount of the positive electrode mixture were changed, and an electrode stacked body having a negative electrode mixture layer with a thickness of 1120 µm and a positive electrode mixture layer with a thickness of 640 µm was used. Also, the thickness of the porous metal layer in the all-solid-state secondary battery was 600 µm.

### (Comparative Example 1)

An all-solid-state battery was produced in the same manner as in Example 1, except that a porous metal substrate constituted by a porous metal foam made of nickel was not used in an electrode stacked body. Also, the thickness of the porous metal layer in the all-solid-state secondary battery was 310 µm.

### (Comparative Example 2)

An all-solid-state secondary battery was produced in the same manner as in Example 1, except that the elastic conductive member was changed to a stainless steel plate having no recess (i.e., the electrode stacked body was not pressed toward the inner bottom face of the recessed container). The thickness of the porous metal layer in the all-solid-state secondary battery was 400 µm.

Each of the all-solid-state secondary batteries of the examples and the comparative examples produced as described above was charged to a voltage of 2.6 V with a constant current at a current value of 4 mA (3.2 mAin Example 2), was subsequently charged with a constant voltage of 2.6 V until the current value reached 0.05 mA (0.04 mA in Example 2), and was then discharged at a current value of 0.4 mA (0.32 mAin Example 2) until the voltage reached 1.0 V. Thereafter, the internal resistance of each battery was measured at 1 kHz with an applied voltage of 10 mV, and the results shown in Table 1 were obtained.

**Table 1**

| | Internal Resistance (Ω) at 1 kHz |
|---|---|
| Ex. 1 | 13 |
| Ex. 2 | 12 |
| Comp. Ex. 1 | 31 |
| Comp. Ex. 2 | 34 |

It was found that, compared to the internal resistance values of the all-solid-state secondary batteries of Examples 1 and 2, the all-solid-state secondary battery of Comparative Example 1, which did not have a porous metal substrate in the electrode stacked body, and the all-solid-state secondary battery of Comparative Example 2, in which a metal plate having no recess was used instead of an elastic conductive member and the metal plate did not substantially press the electrode stacked body toward the inner bottom face of the recessed container, had larger internal resistance values and insufficient current collection properties.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

An all-solid-state battery according to the present invention can be applied to applications that are similar to those of conventionally known primary batteries and secondary batteries, but the all-solid-state battery has great heat resistance because it has a solid electrolyte instead of an organic electrolyte. Therefore, the all-solid-state battery according to the present invention can be preferably used in applications in which the battery is exposed to high temperatures.

### Description of Reference Numerals

- 100, 101: All-solid-state battery
- 110: Electrode stacked body
- 120: Positive electrode
- 121: Positive electrode mixture layer
- 121a: Positive electrode mixture
- 122: Sheet-like porous metal substrate
- 130: Negative electrode
- 131: Negative electrode mixture layer
- 132: Sheet-like porous metal substrate
- 140: Solid electrolyte layer
- 150: Recessed container
- 151: Bottom
- 152: Side wall
- 153: Opening portion
- 154, 155: Support
- 160: Sealing body
- 170: Elastic conductive member
- 171: Locking portion
- 172: Recess
- 180: Connection terminal
- 181: Conductive path
- 190: Connection terminal
- 191: Conductive path
- 200: Porous metal layer
- 210: Seal ring
- 220: Elastic conductive member
- 221: Supported portion
- 222: Flat portion
- 223: Spring part (spring piece)
- 223a: Boundary
- 223b: Leading end

## Claims

1. An all-solid-state battery comprising:
a battery container; and
an electrode stacked body accommodated in the battery container,
wherein the battery container includes a recessed container and a sealing body,
the recessed container has a bottom, a side wall, and an opening portion, and has a conductive path extending from an inside to an outside of the recessed container,
the opening portion of the recessed container is covered with the sealing body,
the electrode stacked body has a positive electrode, a negative electrode, and a solid electrolyte layer interposed between the positive electrode and the negative electrode,
the positive electrode has a positive electrode mixture layer and a sheet-like porous metal substrate disposed on a surface of the positive electrode mixture layer,
at least a portion of the porous metal substrate of the positive electrode, including an end on the positive electrode mixture layer side, is embedded in a surface layer of the positive electrode mixture layer and is integrated with the positive electrode mixture layer, and another end of the porous metal substrate of the positive electrode is exposed on a surface of the positive electrode,
the negative electrode has a negative electrode mixture layer and a sheet-like porous metal substrate disposed on a surface of the negative electrode mixture layer,
at least a portion of the porous metal substrate of the negative electrode, including an end on the negative electrode mixture layer side, is embedded in a surface layer of the negative electrode mixture layer and is integrated with the negative electrode mixture layer, and another end of the porous metal substrate of the negative electrode is exposed on a surface of the negative electrode,
an elastic conductive member is disposed between the electrode stacked body and an inner bottom face of the sealing body, and
the elastic conductive member is electrically connected to the conductive path and presses the electrode stacked body toward an inner bottom face of the recessed container.

2. The all-solid-state battery according to claim 1,
wherein the recessed container has a support that supports the elastic conductive member.

3. The all-solid-state battery according to claim 2,
wherein the elastic conductive member has a locking portion and is fixed to the support of the recessed container by the locking portion.

4. The all-solid-state battery according to claim 1,
wherein the elastic conductive member is a metal plate.

5. The all-solid-state battery according to claim 4,
wherein the elastic conductive member has a flat portion facing the electrode stacked body, and a spring part that rises from the flat portion and presses the electrode stacked body toward the inner bottom face of the recessed container, and
the spring part has a spring piece that is supported by the flat portion in a cantilever manner and presses the electrode stacked body toward the inner bottom face of the recessed container.

6. The all-solid-state battery according to any one of claims 1 to 5,
wherein a porous metal layer is provided between the electrode stacked body and the inner bottom face of the recessed container, and the porous metal layer is electrically connected to the conductive path.

7. The all-solid-state battery according to claim 6,
wherein the porous metal layer is constituted by a porous metal foam.
